# EUROPEAN PATENT APPLICATION

(11) **EP 4 293 408 A1**
(43) Date of publication of application: **20.12.2023**
(21) Application number: 22178948.0
(22) Date of filing: 14.06.2022
(51) Int. Cl.: G02B 21/36, G02B 27/10, G02B 21/24, G02B 21/16, G02B 21/26, G06T 7/10, G06T 7/30

(54) **IMAGING DEVICE AND METHOD FOR ALIGNING IMAGES**

(71) Applicant: Leica Microsystems CMS GmbH, 35578 Wetzlar (DE)
(72) Inventor: Ritschel, Kai, 35452 Heuchelheim (DE); Beljan, Mate, 61440 Oberursel (DE)
(74) Representative: Schaumburg und Partner Patentanwälte mbB

(57) **Abstract**

An imaging device (100) comprises a detection optics (108) configured to receive detection light from a sample (102), and to direct the detection light into a main beam path (110). The imaging device (100) also comprises a beam splitting element (112) configured to be inserted into the main beam path (110), to direct a first part of the detection light into a first branched beam path (114), and to direct a second part of the detection light into a second branched beam path (116). At least one first filter element (122) is configured to be inserted into the first branched beam path (114). A first detector element (120) is arranged in the first branched beam path (114), and configured to capture at least a first test image when the beam splitting element (112) is inserted into the main beam path (110) and the first filter element (122) is not inserted into the first branched beam path (114), a third test image the first filter element (122) is inserted into the first branched beam path (114), and a first actual image. At least one second filter element (128) is configured to be inserted into the second branched beam path (116). A second detector element (126) is arranged in the second branched beam path (116), and configured to capture at least a second test image when the beam splitting element (112) is inserted into the main beam path (110) and the second filter element (128) is not inserted into the second branched beam path (116), a fourth test image when the second filter element (128) is inserted into the second branched beam path (116), and a second actual image. The imaging device (100) further comprises a controller (130) configured to determine a first misalignment between the first test image and the second test image, a second misalignment between the third test image and the first test image, and a third misalignment between the fourth test image and the second test image; and to align the first actual image and the second actual image based on the first misalignment, the second misalignment, and the third misalignment.

## Description

### Technical field

The invention relates to an imaging device. Further, the invention relates to a method for aligning images, and to a computer program product.

### Background

In fluorescence microscopy, arrangements of interchangeable filters and highly sensitive detectors are used to produce images from fluorescent light. The filters are optical elements arranged in the beam path between the sample and the detector. Therefore, changing the filter can cause an offset or even a distortion of the beam path, so that images captured before and after the filter change are no longer matched with pixel accuracy. This effect is even more pronounced when multiple detectors are used in order to simultaneously capture images in different wavelengths by using different filters. In addition to the offset due the filters the detectors may also be misaligned relative to each other. Such a misalignment manifests itself as a relative offset and/or rotation of the images generated by the different detectors. In an imaging device comprising multiple detectors, any misalignment of the images generated by the different detectors negates the advantage gained by simultaneously capturing images. Thus, in order to counteract the misalignment, the imaging device needs to be calibrated which allows the images captured by the different detectors to be aligned.

Typically, the calibration is done manually by a user. In order to calibrate the imaging device, the user has to find and mark identical points in the different images. When different filters are used, different wavelengths are captured by different detectors and the images produced by the detectors are potentially very different. This may result in a certain inaccuracy. Alternatively, a technical sample may be used to determine a suitable calibration before the actual image acquisition, and the calibration is then applied to the actual image data. However, such a calibration is very time-consuming because it has to be repeated every time a component that has an influence on the beam path is changed, for example the filters or beam splitters. It also takes an experienced user to determine what hardware changes in the imaging device require a recalibration. In addition, temperature variations can introduce an additional offset and thus invalidate the previous calibration relatively quickly and unnoticed.

### Summary

It is therefore an object to provide an imaging device and a method for aligning images that allow a calibration of the imaging device to be performed fast and efficiently, in particular the more filter elements are used.

The aforementioned object is achieved by the subject-matter of the independent claims. Advantageous embodiments are defined in the dependent claims and the following description.

The proposed imaging device comprises a detection optics configured to receive detection light from a sample, and to direct the detection light into a main beam path. The imaging device also comprises a beam splitting element configured to be inserted into the main beam path, to direct a first part of the detection light into a first branched beam path, and to direct a second part of the detection light into a second branched beam path. The imaging device also comprises at least one first filter element configured to be inserted into the first branched beam path. The imaging device also comprises a first detector element arranged in the first branched beam path. The first detector element is configured to capture at least a first test image when the beam splitting element is inserted into the main beam path and the first filter element is not inserted into the first branched beam path, a third test image the first filter element is inserted into the first branched beam path, and a first actual image. The imaging device also comprises at least one second filter element configured to be inserted into the second branched beam path. The imaging device also comprises a second detector element arranged in the second branched beam path. The second detector element is configured to capture at least a second test image when the beam splitting element is inserted into the main beam path and the second filter element is not inserted into the second branched beam path, a fourth test image when the second filter element is inserted into the second branched beam path, and a second actual image. The imaging device further comprises a controller configured to determine a first misalignment between the first test image and the second test image, a second misalignment between the third test image and the first test image, and a third misalignment between the fourth test image and the second test image, and to align the first actual image and the second actual image based on the first misalignment, the second misalignment, and the third misalignment.

In order to align the first actual image and the second actual image, the imaging device is calibrated. This calibration comprises two parts. A first part of the calibration involves capturing the first test image with the first detector, and the second test image with the second detector when the beam splitting element is inserted into the main beam path and no filter element is inserted into the first and second branched beam paths. The controller then determines first misalignment between the first test image and the second test image. The first misalignment is the misalignment introduced by the beam splitting element. Thereby, in the first part of the calibration, the controller determines the misalignment between the first detector and the second detector due to the beam splitting element.

A second part of the calibration involves capturing the third image with the first detector when the first filter element is inserted into the first branched beam path, and capturing the fourth image with the second detector when the second filter element is inserted into the second branched beam path. The controller then determines the second misalignment between the first test image and the third test image, and the third misalignment between the second test image and the fourth test image. The second misalignment is the misalignment introduced by the first filter element, and the third misalignment is the misalignment introduced by the second filter element. Thereby, in the second part of the calibration, the controller determines the additional misalignment due to the first filter element and the second filter element.

The first and second part of the calibration are performed interpedently of each other. Thus, whenever the first filter element and/or second filter is changed, only the second part of the calibration needs to be performed again. The third test image and the fourth test image need only be referenced against the first test image and the second test image, respectively, and not against each other. Accordingly, the time needed for the second part of the calibration increases only linearly with the number of first and second filter elements. Further, the first part of the calibration process only needs to be performed when the system configuration of the imaging system changes. For example, when the beam splitting element is removed from and inserted back into the main beam path. Thereby, the two part calibration allows the calibration of the imaging device to be performed fast and efficiently, in particular the more filter elements are used.

In a preferred embodiment, the controller is configured to detect a system configuration change of the imaging system which may cause a change of at least one of the first misalignment, the second misalignment, and the third misalignment. The controller may be configured to control the first detector element to recapture the first test image, and the second detector element to recapture the second test image when the controller has detected the system configuration change. The controller may further be configured to redetermine the first misalignment, the second misalignment and/or the third misalignment when the controller has detected the system configuration change. In particular, the controller may be configured to detect the system configuration change based on a temperature change and/or based on whether the beam splitting element has been removed from and inserted back into the main beam path since the first misalignment has been determined.

In this embodiments, the controller is configured to determine whether the first misalignment, the second misalignment and/or the third misalignment needs to be redetermined. The controller can easily track the status of all relevant components of the imaging system, for example whether they have been moved or not or whether the temperature of the imaging device has changed significantly. In other words, the controller can easily track the system configuration of the imaging system. Accordingly, the controller can detect any change in the system configuration, and decide which change may cause a change of at least one of the first misalignment, the second misalignment, and the third misalignment. This information enables the controller to determine whether the first misalignment, the second misalignment and/or the third misalignment needs to be redetermined. The present embodiments allow even an inexperienced or new user to properly use the imaging system, since the user does not need to have perfect knowledge of the imaging device. This makes the imaging system very easy to use.

In another preferred embodiment, the imaging system comprises an output unit. The controller may be configured to inform a user via the output unit that the first misalignment needs to be redetermined when the controller has detected the system configuration change. In this embodiment, the controller informs the user when recalibration is necessary. The user may then decide to perform the recalibration, for example by a user input via a user input device. In this embodiment, even an inexperienced or new user is enabled to make an informed decision whether to perform the recalibration, thereby making the imaging device even easier to use. The output unit may in particular be a monitor configured to display an image generated by the controller to the user. The output unit may also be configured to output sound, and to inform the user that the first misalignment needs to be redetermined by a sound signal. The controller may also be configured to display the first actual image and/or the second actual image via the output unit.

In another preferred embodiment, the controller is configured to determine the first misalignment, the second misalignment and/or the third misalignment based on an image of an edge and/or a corner in the first test image and the third test image, and/or the second test image and the fourth test image. In particular, the edge and/or the corner is an edge or a corner, respectively, of a sample stage of the imaging device or of a sample insert inserted into the sample stage or a sample carrier. The edge or corner is visible in all four test images, and can therefore be used like a dedicated fiducial. Further, the edge or corner is visible regardless of the filter elements. Thereby, in this embodiment simple and cost-effective means for determining the first misalignment, the second misalignment and/or the third misalignment is provided.

In another preferred embodiment, the controller is configured to determine the first misalignment, the second misalignment and/or the third misalignment based on an image of a fiducial in the first test image and the third test image, and/or the second test image and the fourth test image. The fiducial may for example be arranged on sample carrier and/or microscope stage. Using a fiducial is a very reliable way of determining the first misalignment, the second misalignment and/or the third misalignment.

In another preferred embodiment, the controller is configured to determine based on the first misalignment a first image transformation that aligns the first and second test images, to determine based on the second misalignment a second image transformation that aligns the third and first test images, and to determine based on the third misalignment a third image transformation that aligns the fourth and second test images. The controller is configured to align the first and second actual images based on the first, second, and third image transformations. The calibration provides information about the relative misalignment between the first detector and the second detector. In this embodiment, the information about the relative misalignment is encoded in the first, second, and third image transformations. Providing the information about the relative misalignment in the form of image transformations makes the alignment of the first actual image and the second actual image more efficient. For example, the first, second, and third image transformations may easily be stored in a memory element for later use. Further, the first, second, and third image transformations can be adapted easily when the system configuration change is detected and recalibration is necessary.

In another preferred embodiment, the controller is configured to determine a correlation coefficient between the aligned first actual image and the aligned second actual image, and to determine a quality of the alignment of the first and second actual images based on the correlation coefficient. The first actual image and the second actual image will be highly correlated when they are aligned. Therefore, the correlation coefficient is a good measure of the quality of the alignment of the first and second actual images. Determining the correlation coefficient is a quality control measure that improves the alignment of the first and second actual images, thereby making the imaging device more reliable. The correlation coefficient may also be used to determine when recalibration is necessary.

In another preferred embodiment, the beam splitting element is configured to direct detection light having a wavelength shorter than a predetermined center wavelength into the first branched beam path, and to direct detection light having a wavelength longer than the predetermined center wavelength into the second branched beam path. In this embodiment, the beam splitting element acts like an edge filter in the sense that the beam splitting element directs most of the detection light having a wavelength below the center wavelength into the first branched beam path. The residual light, i.e. most of the detection light having a wavelength above the center wavelength, is directed into the second branched beam path. Thereby at least two different fluorophores can be imaged simultaneously.

In another preferred embodiment, the imaging device comprises at least two first filter elements and/or at least two second filter elements. The first filter elements and the second filter elements may be arranged on a filter wheel. Thereby, the filter elements can easily be exchanged.

In another preferred embodiment, the first filter element and/or the second filter element are band pass filters. A band pass is a filter that blocks all wavelengths of light except a wavelength band around a center wavelength. In this embodiment, the filter elements filter most of the detection light emitted by the sample except for the detection light having a wavelength in the wavelength band around the center wavelength. Thereby, only the relevant wavelengths are selected for detection, reducing background noise.

In another preferred embodiment, the imaging system comprises a housing. The beam splitting element may be arranged inside the housing. The first filter element, the second filter element, the first detector element, and the second detector element may be arranged outside the housing. In this embodiment, when the first filter element or the second filter element are exchanged, this change happens outside the housing. Thereby, the optical elements arranged inside the housing remain undisturbed during the filter exchange. This means that the fist part of the calibration and the second part of the calibration completely decouple, and can therefore be performed completely independent of each other. This makes the the imaging device more reliable.

In another preferred embodiment, the housing comprises a first mount configured to mount the first filter element and/or the first detector element outside the housing. The housing may comprise a second mount configured to mount the second filter element and/or the second detector element outside the housing. The first mount and/or the second mount may in particular be c-mounts. In this embodiment, the imaging device is designed to be modular. Both the filter elements and the detector elements can easily be exchanged, allowing the user to select the components best suited for their specific application.

In another preferred embodiment, the imaging device is a microscope, in particular a fluorescence microscope.

The invention also relates to a method for aligning images with the imaging device described above. The method comprises the following steps: Determining a first misalignment between an image captured by a first detector element arranged in a first branched beam path, and an image captured by a second detector element arranged in a second branched beam path when a beam splitting element is inserted into a main beam path and no filter element is inserted into the first and second branched beam paths. The beam splitting element directs a first part of a detection light into the first branched beam path, and a second part of the detection light into the second branched beam path. Determining a second misalignment between an image captured by the first detector element when a first filter element is inserted into the first branched beam path, and an image captured by the first detector element when no filter element is inserted into the first branched beam path. Determining a third misalignment between an image captured by the second detector element when a second filter element is inserted into the second branched beam path, and an image captured by the second detector element when no filter element is inserted into the second branched beam path. Aligning a first actual image captured by the first detector element and a second actual image captured by the second detector element based on the first misalignment, the second misalignment, and the third misalignment.

The method has the same advantages as the imaging device described above and can be supplemented using the features of the dependent claims directed at the imaging device.

The invention further relates to a computer program product comprising a program code configured to perform the method described above, when the computer program product is run on a processor.

The computer program product has the same advantages as the imaging device and the method described above, and can in particular be supplemented using the features of the dependent claims directed at the positioning device.

### Short Description of the Figures

Hereinafter, specific embodiments are described referring to the drawings, wherein:
- Figure 1: is a schematic view of an imaging device according to an embodiment;
- Figure 2: is a schematic view of a sample carrier for use with the imaging device according to Figure 1;
- Figure 3: is a flowchart of a method for aligning images with the imaging device according to Figures 1 and 2;
- Figure 4: is a flowchart of the first subprocess of the method for aligning images with the imaging device according to Figure 3; and
- Figure 5: is a flowchart of the second subprocess of the method for aligning images with the imaging device according to Figure 3.

### Detailed Description

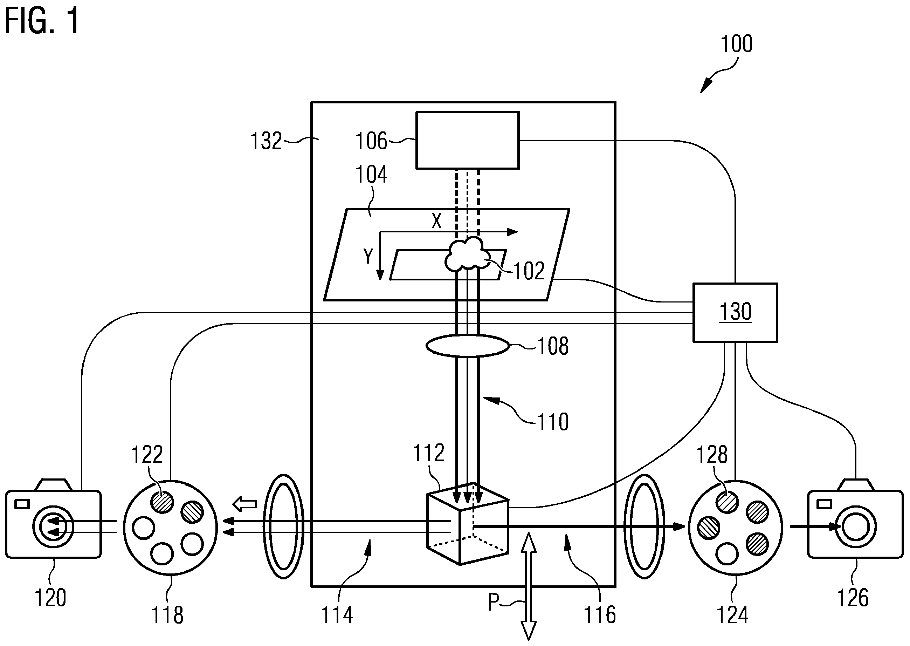

Figure 1 is a schematic view of an imaging device 100 according to an embodiment.

The imaging device 100 is exemplary formed as a microscope. More specifically, in the present embodiment, the imaging device 100 is formed as a fluorescence microscope configured to image a sample 102 by means of fluorescence imaging. However, the imaging device 100 is not limited to be a microscope, for example the imaging device 100 may also be a slide scanner or a flow cytometer, or any other imaging device where two simultaneous images of the same sample are desired.

The sample 102 to be imaged is arranged on a sample stage 104 of the imaging device 100. The sample stage 104 is exemplary formed as an X-Y-table configured to move the sample 102 along two perpendicular directions. In the present embodiment, a light source unit 106 of the imaging device 100 is arranged atop the sample 102 and the sample stage 104, and configured to emit excitation light for exciting fluorophores located within the sample 102. In other embodiments, the light source unit 106 may be arranged below the sample stage 104. The light source unit 106 may also be configured to emit other light, for example white light for facilitating conventional light microscope techniques such as reflected light microscopy or transmitted light microscopy. In the present embodiment, a detection light is formed by the fluorescence light emitted by the excited fluorophores. In other embodiments, the detection light may for example be formed by light that has passed the sample 102 or that has been reflected by the sample 102.

The imaging device 100 comprises a detection optics 108 arranged below the sample stage 104 that is exemplary formed as a microscope objective. The detection optics 108 captures the detection light emitted by the sample 102 and directs the detection light into a main beam path 110 of the imaging device 100. The main beam path 110 comprises a beam splitting element 112 that can be inserted into and removed from the main beam path 110. This is indicated in Figure 1 by a double arrow P. When the beam splitting element 112 is inserted into the main beam path 110, the beam splitting element 112 splits the main beam path 110 into a first branched beam path 114 and into a second branched beam path 116 by directing a first part of the detection light into the first branched beam path 114, and directing a second part of the detection light into the second branched beam path 116. When the beam splitting element 112 is not inserted into the main beam path 110, the main beam path 110 continues unhindered. In the present embodiment, the beam splitting element 112 is exemplary formed as a dichroic beam splitting cube that directs a first part of the detection light having a first wavelength into the first branched beam path 114, and a second part of the detection light having a second wavelength into the second branched beam path 116.

The first branched beam path 114 is shown to branch of to the left in Figure 1, and comprises a first filter wheel 118 and a first detector element 120. The first filter wheel 118 comprises a number of first filter elements 122 which can be alternately introduced into the first branched beam path 114 by rotating the first filter wheel 118. The first detector element 120 is arranged in first branched beam path 114 following the first filter wheel 118. The second branched beam path 116 is shown to branch of to the right in Figure 1, and comprises a second filter wheel 124 and a second detector element 126. The second filter wheel 124 comprises a number of second filter elements 128 which can be alternately introduced into the second branched beam path 116 by rotating the first filter wheel 118. The second detector element 126 is arranged in second branched beam path 116 following the second filter wheel 124.

The first detector element 120 and the second detector element 126 are configured to capture the detection light, and to generate images from the captured detection light. In particular, since the first branched beam path 114 and the second branched beam path 116 both split off from the main beam path 110, the first detector element 120 and the second detector element 126 can image the sample 102 simultaneously. By introducing different first filter elements 122 and second filter element 128 into the first branched beam path 114 and the second branched beam path 116, respectively, the images generated by the first detector element 120 and the second detector element 126 will comprise different wavelengths of the detection light. This can be used to simultaneously image different structures of the sample 102 that have been stained with different fluorophores emitting fluorescence light of different wavelengths.

However, in order to relate the different structures in the images generated by the first detector element 120 and the second detector element 126, the images need to be aligned. One source of misalignment between the images is that it is impossible to arrange the first detector element 120 and the second detector element 126 as well as the beam splitting element 112 perfectly. There will always be a relative offset and/or rotation of the images generated by the first detector element 120 and the second detector element 126 due to the arrangement of the first detector element 120, the second detector element 126, and the beam splitting element 112 inside the imaging device 100. A second source of misalignment between the images are the first filter elements 122 and the second filter elements 128. The first filter elements 122 and the second filter elements 128 are optically active elements arranged in the beam path between the sample 102 and the first detector element 120 and the second detector element 126, respectively. Therefore, the first filter elements 122 and the second filter elements 128 will displace or distort the beam path. This displacement will result in an additional misalignment between the images generated by the first detector element 120 and the second detector element 126.

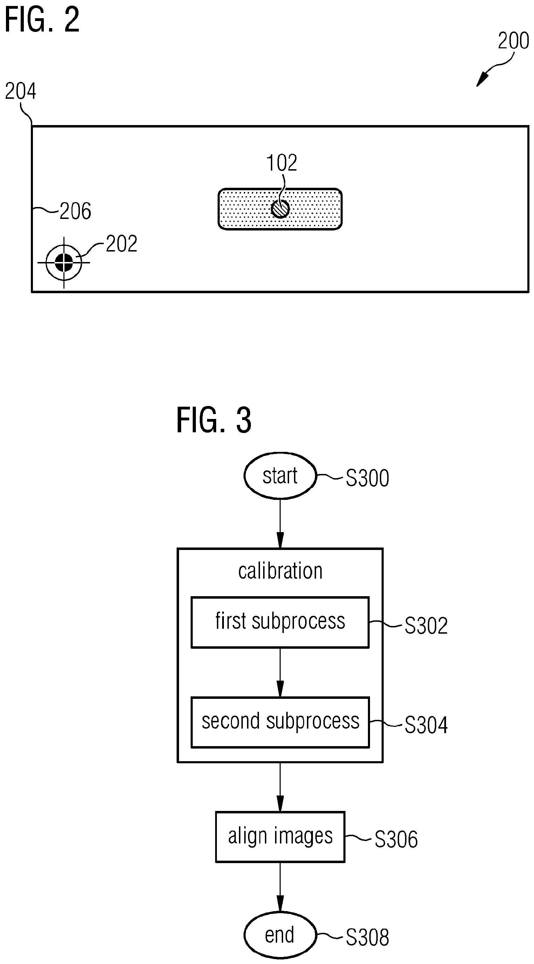

The imaging device 100 comprises a controller 130 that is configured to perform a method for aligning images captured by the imaging device 100. The method will be described below in detail with reference to Figures 3 to 5. The controller 130 is further configured to control the light source unit 106, the sample stage 104, the first and second filter wheels 118, 124, the first and second detector elements 120, 126, and the beam splitting element 112.

The imaging device 100 further comprises a housing 132 which also functions as a microscope stand. Most of the imaging device 100's components, in particular the light source unit 106, the sample stage 104, the detection optic, and the beam splitting element 112s, are enclosed by the housing 132. Thereby, the housing 132 protects the enclosed components from dust and prevents stray light from entering into the main beam path 110.

The housing 132 comprises two mounts 134, 136 which are exemplary formed as c-mounts. A first mount 134 is shown left of the housing 132 in Figure 1, and configured to mount the first filter element 122 and the first detector element 120 outside the housing 132. A second mount 136 is shown right of the housing 132 in Figure 1, and configured to mount the second filter element 128 and the second detector element 126 outside the housing 132.

Figure 2 is a schematic view of a sample carrier 200 for use with the imaging device 100 according to Figure 1.

The sample carrier 200 is exemplary formed as a microscope slide on which the sample 102 is prepared. However, the sample carrier 200 may be any element suitable for mounting the sample 102, for example a petri-dish, a multiwell plate or a sample stage 104. The sample carrier 200 comprises a fiducial 202 arranged in the lower left corner. The fiducial 202 may be used to align the aligning images captured by the imaging device 100 with the method described below with reference to Figures 3 to 5. Alternatively, a corner 204 and/or an edge 206 of the sample carrier 200 may be used as a fiducial.

Figure 3 is a flowchart of a method for aligning images with the imaging device 100 according to Figures 1 and 2.

The method described with reference to Figure 3 comprises a calibration of the imaging device 100. The calibration allows the images captured by the first detector element 120 and the second detector element 126 to be aligned.

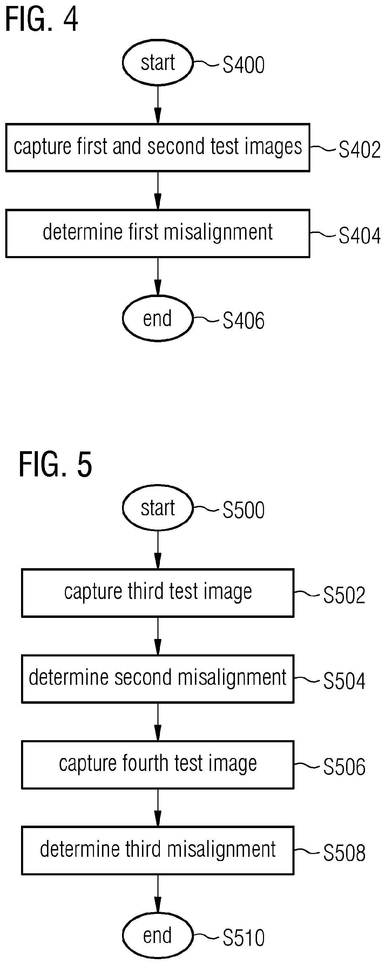

The process is started in step S300. In step S302, a first subprocess is performed. In the first subprocess the controller 130 determines a first misalignment between the first detector and the second detector due to the beam splitting element 112. The first subprocess is described below in more detail with reference to Figure 4. In step 304, a second subprocess is performed. In the second subprocess, the controller 130 determines an additional misalignment due to the first filter elements 122 and the second filter elements 128. In particular, the controller 130 determines a second misalignment due to the introduction of one of the first filter elements 122 into the first branched beam path 114, and a third misalignment due to the introduction of one of the second filter elements 128 into the second branched beam path 116. In step S306 a first actual image captured by the first detector element 120 and a second actual image captured by the second detector element 126 are aligned based on the first misalignment, the second misalignment, and the third misalignment. The first actual image and the second actual image are images of the sample 102 captured in the context of an actual experiment as opposed to images captured for the purpose of calibrating the imaging device 100. In particular, the alignment of the first actual image and the second actual image is performed by combining a number of image transformations determined during the first subprocess and the second subprocess. This is described in more detail below with reference to images 4 and 5. In step S308 the process is ended.

The first subprocess and the second subprocess, i.e. steps S302 and S304, are a calibration of the imaging device 100. The complete calibration process only needs to be performed once. After that initial calibration, the first subprocess and the second subprocess can be performed independently of each other. For example, when the first filter element 122 and/or second filter is changed, it is sufficient to repeat the second subprocess in order to redetermine the second misalignment and/or the third misalignment, respectively. The first subprocess only needs to be repeated when the system configuration of the imaging system changes. For example, after the beam splitting element 112 has been removed from and inserted back into the main beam path 110.

Figure 4 is a flowchart of the first subprocess of the method for aligning images with the imaging device 100 according to Figure 3.

The first subprocess is started in step S400. In step S402 a first test image is captured by the first detector element 120, and a second test image is captured by the second detector element 126 when the beam splitting element 112 is inserted into the main beam path 110 and no filter element is inserted into the first and second branched beam path 116s. In step S404 the controller 130 determines the first misalignment between the first test image and the second test image. No filter elements are arranged in the first branched beam path 114 and the second branched beam path 116 when the first test image and the second test image are captured in step S402. Thus, the misalignment of the first test image and the second test, i.e. first misalignment, is mainly caused by the arrangement of the first detector element 120 and the second detector element 126 as well as displacement introduced by the beam splitting element 112. In particular, in step S404, the controller 130 determines a first image transformation that aligns the first test image to the second test image. This first image transformation is saved and used later to align the first actual image and the second actual image. The first subprocess is ended in step S406.

Figure 5 is a flowchart of the second subprocess of the method for aligning images with the imaging device 100 according to Figure 3.

The first subprocess is started in step S500. In step S502 a third test image is captured by the first detector element 120, when one of the first filter elements 122 is inserted into the first branched beam path 114. Step S502 may be repeated to capture additional third test images for each of the remaining first filter elements 122. In step S504 the controller 130 determines the second misalignment between the first test image and the third test image. When the first test image is captured, no filter element is arranged in the first branched beam path 114. By comparing the first test image to the third test image, one sees the effect of the first filter elements 122 on the first branched beam path 114. Accordingly, the second misalignment is the misalignment caused by the introduction of the first filter element 122 into the first branched beam path 114. Step S504 may be repeated for the additional third test images when additional third test images have been captured. In step S504, the controller 130 may also determine a second image transformation that aligns the third test image to the first test image that may be saved and used later to align the first actual image and the second actual image.

In step S506 a fourth test image is captured by the second detector element 126, when one of the second filter elements 128 is inserted into the second branched beam path 116. Step S506 may be repeated to capture additional fourths test images for each of the remaining second filter elements 128. In step S508 the controller 130 determines the third misalignment between the second test image and the fourth test image. Step S508 may be repeated for the additional fourth test images when additional third test images have been captured. When the second test image is captured, no filter element is arranged in the second branched beam path 116. By comparing the second test image to the fourth test image, one sees the effect of the second filter elements 128 on the second branched beam path 116. Accordingly, the third misalignment is the misalignment caused by the introduction of the second filter element 128 into the second branched beam path 116. In step S508, the controller 130 may also determine a third image transformation that aligns the fourth test image to the second test image that may be saved and used later to align the first actual image and the second actual image. The second subprocess is ended in step S510.

The steps S502 and S506 may be performed concurrently or consecutively in any order. Likewise, steps S504 and S508 may be performed concurrently or consecutively in any order.

The Figures 3, 4 and 5 describe a method for aligning the first actual image and the second actual image captured by the imaging device 100 based on a calibration of the imaging device 100. This calibration provides an information about the misalignment of the first actual image and the second actual image that is quantified in the first image transformation, the second image transformation, and the third image transformation. In order to align the first actual image and the second actual image, the second image transformation is applied to the first actual image, and the third image transformation is applied to the second actual image. This counteracts the misalignment due the first filter element 122 and the second filter element 128 arrange in the first branched beam path 114 and the second branched beam path 116, respectively. After that, the first image transformation is applied the already transformed first actual image. This counteracts the misalignment due the beam splitting element 112 inserted into the main beam path 110. After the image transformations have been applied, the first actual image and the second actual image are aligned.

Identical or similarly acting elements are designated with the same reference signs in all Figures. As used herein the term "and/or" includes any and all combinations of one or more of the associated listed items and may be abbreviated as "/". Individual features of the embodiments and all combinations of individual features of the embodiments among each other as well as in combination with individual features or feature groups of the preceding description and/or claims are considered disclosed.

Although some aspects have been described in the context of an apparatus, it is clear that these aspects also represent a description of the corresponding method, where a block or device corresponds to a method step or a feature of a method step.

Analogously, aspects described in the context of a method step also represent a description of a corresponding block or item or feature of a corresponding apparatus.

### List of Reference Signs

- 100: Imaging device
- 102: Sample
- 104: Sample stage
- 106: Light source unit
- 108: Detection optics
- 110: Main beam path
- 112: Beam splitting element
- 114, 116: Branched beam path
- 118: Filter wheel
- 120: Detector element
- 122: Filter element
- 124: Filter wheel
- 126: Detector element
- 128: Filter element
- 130: Controller
- 132: Housing
- 134,136: Mount
- 200: Sample carrier
- 202: Fiducial
- 204: Corner
- 206: Edge
- P: Arrow

## Claims

1. An imaging device (100) comprising
a detection optics (108) configured to receive detection light from a sample (102), and to direct the detection light into a main beam path (110);
a beam splitting element (112) configured to be inserted into the main beam path (110), to direct a first part of the detection light into a first branched beam path (114), and to direct a second part of the detection light into a second branched beam path (116);
at least one first filter element (122) configured to be inserted into the first branched beam path (114);
a first detector element (120) arranged in the first branched beam path (114), and configured to capture at least a first test image when the beam splitting element (112) is inserted into the main beam path (110) and the first filter element (122) is not inserted into the first branched beam path (114), a third test image the first filter element (122) is inserted into the first branched beam path (114), and a first actual image;
at least one second filter element (128) configured to be inserted into the second branched beam path (116);
a second detector element (126) arranged in the second branched beam path (116), and configured to capture at least a second test image when the beam splitting element (112) is inserted into the main beam path (110) and the second filter element (128) is not inserted into the second branched beam path (116), a fourth test image when the second filter element (128) is inserted into the second branched beam path (116), and a second actual image; and
a controller (130) configured to determine a first misalignment between the first test image and the second test image, a second misalignment between the third test image and the first test image, and a third misalignment between the fourth test image and the second test image; and
to align the first actual image and the second actual image based on the first misalignment, the second misalignment, and the third misalignment.

2. The imaging system according to claim 1, wherein the controller (130) is configured to detect a system configuration change of the imaging system which may cause a change of at least one of the first misalignment, the second misalignment, and the third misalignment; to control the first detector element (120) to recapture the first test image, and the second detector element (126) to recapture the second test image when the controller (130) has detected the system configuration change; and to redetermine the first misalignment, the second misalignment and/or the third misalignment when the controller (130) has detected the system configuration change.

3. The imaging system according to claim 2, wherein the controller (130) is configured to detect the system configuration change based on a temperature change and/or based on whether the beam splitting element (112) has been removed from and inserted back into the main beam path (110) since the first misalignment has been determined.

4. The imaging system according to claim 2 or 3, comprising an output unit; wherein the controller (130) is configured to inform a user via the output unit that the first misalignment needs to be redetermined when the controller (130) has detected the system configuration change.

5. The imaging device (100) according to any one of the preceding claims, wherein the controller (130) is configured to determine the first misalignment, the second misalignment and/or the third misalignment based on an image of an edge (206) and/or a corner (204) (204) in the first test image and the third test image, and/or the second test image and the fourth test image.

6. The imaging device (100) according to claim 5, wherein the edge (206) and/or the corner (204) (204) is an edge (206) or a corner (204) (204), respectively, of a sample stage (104) of the imaging device (100) or of a sample (102) insert inserted into the sample stage (104) or a sample carrier (200).

7. The imaging device (100) according to any one of the preceding claims, wherein the controller (130) is configured to determine the first misalignment, the second misalignment and/or the third misalignment based on an image of a fiducial (202) in the first test image and the third test image, and/or the second test image and the fourth test image.

8. The imaging device (100) according to any one of the preceding claims, wherein the controller (130) is configured to determine based on the first misalignment a first image transformation that aligns the first and second test images, to determine based on the second misalignment a second image transformation that aligns the third and first test images, and to determine based on the third misalignment a third image transformation that aligns the fourth and second test images; and wherein the controller (130) is configured to align the first and second actual images based on the first, second, and third image transformations.

9. The imaging device (100) according to any one of the preceding claims, wherein the controller (130) is configured to determine a correlation coefficient between the aligned first actual image and the aligned second actual image, and to determine a quality of the alignment of the first and second actual images based on the correlation coefficient.

10. The imaging device (100) according to any one of the preceding claims, wherein the beam splitting element (112) is configured to direct detection light having a wavelength shorter than a predetermined center wavelength into the first branched beam path (114), and to direct detection light having a wavelength longer than the predetermined center wavelength into the second branched beam path (116).

11. The imaging device (100) according to any one of the preceding claims, comprising a housing (132); wherein the beam splitting element (112) is arranged inside the housing (132); and wherein the first filter element (122), the second filter element (128), the first detector element (120), and the second detector element (126) are arranged outside the housing (132).

12. The imaging device (100) according to claim 11, wherein the housing (132) comprises a first mount (134) configured to mount the first filter element (122) and/or the first detector element (120) outside the housing (132); and wherein the housing (132) comprises a second mount (136) configured to mount the second filter element (128) and/or the second detector element (126) outside the housing (132).

13. The imaging device (100) according to any one of the preceding claims, wherein the imaging device (100) is a microscope, in particular a fluorescence microscope.

14. A method for aligning images captured by an imaging device (100), the method comprising the following steps:
a) determining a first misalignment between an image captured by a first detector element (120) arranged in a first branched beam path (114), and an image captured by a second detector element (126) arranged in a second branched beam path (116) when a beam splitting element (112) is inserted into a main beam path (110) and no filter element is inserted into the first and second branched beam path (116)s, wherein the beam splitting element (112) directs a first part of a detection light into the first branched beam path (114), and a second part of the detection light into the second branched beam path (116);
b) determining a second misalignment between an image captured by the first detector element (120) when a first filter element (122) is inserted into the first branched beam path (114), and an image captured by the first detector element (120) when no filter element is inserted into the first branched beam path (114);
c) determining a third misalignment between an image captured by the second detector element (126) when a second filter element (128) is inserted into the second branched beam path (116), and an image captured by the second detector element (126) when no filter element is inserted into the second branched beam path (116); and
d) aligning a first actual image captured by the first detector element (120) and a second actual image captured by the second detector element (126) based on the first misalignment, the second misalignment, and the third misalignment.

15. Computer program product comprising a program code configured to perform the method according to claim 14, when the computer program product is run on a processor.
